(19)

Europäisches
Patentamt
European
Patent Office
Office européen
des brevets

(11)  EP 2 269 883 A1

(12)  **EUROPEAN PATENT APPLICATION**

(43) Date of publication:
   **05.01.2011  Bulletin 2011/01**

(51) Int Cl.:
   ***B60W 30/12*** (2006.01)   ***B60W 40/06*** (2006.01)

(21) Application number: **10167694.8**

(22) Date of filing: **29.06.2010**

(84) Designated Contracting States:
   **AL AT BE BG CH CY CZ DE DK EE ES FI FR GB
   GR HR HU IE IS IT LI LT LU LV MC MK MT NL NO
   PL PT RO SE SI SK SM TR**
   Designated Extension States:
   **BA ME RS**

(30) Priority: **30.06.2009  JP 2009156118**

(71) Applicant: **Clarion Co., Ltd.**
   **Bunkyo-ku
   Tokyo 112-8608 (JP)**

(72) Inventors:
   • **Imai, Masato
      Tokyo 100-8220 (JP)**
   • **Hoshino, Masatoshi
      Tokyo 100-8220 (JP)**
   • **Sakata, Masao
      Saitama 330-0081 (JP)**

(74) Representative: **MERH-IP
   Matias Erny Reichl Hoffmann
   Paul-Heyse-Strasse 29
   80336 München (DE)**

Remarks:
   A request for correction of one claim has been filed
   pursuant to Rule 139 EPC. A decision on the request
   will be taken during the proceedings before the
   Examining Division (Guidelines for Examination in
   the EPO, A-V, 3.).

(54)  **Lane judgement equipment and navigation system**

(57)   There is provided lane judgement equipment
that is capable of quickly and accurately judging the lane
that a vehicle is traveling in on a road with plural lanes
in each direction. It comprises a vehicle position detection
unit (6), a map information acquisition unit (7), and a ref-
erence position detection unit (1) adapted to detect a
reference position that is set in advance in the vicinity of
an entrance to the road with plural lanes in each direction.
In order to determine on what lane the vehicle is travelling
a road-width direction traveled distance computation unit
computes a distance traveled in a road-width direction
from the reference position detected by the reference
position detection unit (1) to the position of the vehicle
on the road with plural lanes in each direction. A lane
judgement unit (5) judges the lane that the vehicle is
traveling in based on the distance traveled in the road-
width direction as computed by the road-width direction
traveled distance computation unit and on the map information acquired by the map information acquisition unit
(7).

FIG. 5

EP 2 269 883 A1

**Description**

BACKGROUND OF THE INVENTION

Field of the Invention

The present invention relates to lane judgement equipment and navigation systems that judge which lane (vehicular lane) a vehicle is traveling in when the vehicle is traveling on a road with plural vehicular lanes in the same direction (hereinafter referred to as a road with plural lanes in each direction) such as so-called two-lane roads, three-lane roads, and the like.

Background Art

Navigation systems that are mounted on automobiles have functions for displaying the position of a vehicle, which is detected by such autonomous methods as a GPS (Global Positioning System), a gyrosystem, and the like, along with map information for the surroundings thereof.
The closer the vehicle position displayed on the navigation system is to the actual vehicle position, the higher the positional accuracy is. When a highly accurate vehicle position is outputted, passengers are able to obtain appropriate road information on their actual vehicle position.
With conventional navigation systems, the estimation accuracy for vehicle positions is low, and it is, for example, difficult to judge which lane a vehicle is traveling in when the vehicle is traveling on a road with plural lanes in each direction. Therefore, in providing guidance regarding junctions on highways or guidance regarding which way to go at intersections, differentiated route guidance per lane cannot be provided, and it is difficult to improve comfort for passengers. In other words, in order to realize advanced route guidance, it is necessary to accurately judge the lane a vehicle is traveling in.
For example, JP Patent Publication (Kokai) No. 2006-023278 A (Patent Document 1) discloses an in-vehicle navigation device that: judges a lane change by way of a blinker operation signal and of a signal (white-line crossing) from a white-line detection unit; judges the position of the lane that the vehicle is traveling in; detects a junction ahead; and, based on the judged lane, provides junction guidance to the driver at a position that precedes the junction by a predetermined distance. In addition, JP Patent Publication (Kokai) No. 2000-105898 A (Patent Document 2) discloses a vehicle control device that judges the lane being traveled based on the kind (solid or dashed) of a white line.
Further, JP Patent Publication (Kokai) No. 11-211491 A (1999) (Patent Document 3) discloses a vehicle position identification device that: calculates, at the time of a left/right turn at an intersection, the radius of turn of a vehicle from the amount of change in the direction of travel of the vehicle or from the path traveled; calculates, based on that radius of turn and for each lane of the road entered after the right or left turn, the probability that the vehicle is traveling in that lane; and identifies the lane the vehicle is traveling in based on the calculated probabilities.

SUMMARY OF THE INVENTION

However, with Patent Document 1, since a lane change is judged by detecting both a winker operation and white-line crossing, there is a risk of losing track of the position of the lane that the vehicle is traveling in as a result of forgetting to operate the blinker or of failing to detect the crossing of a white line. In addition, because it is premised on white-line crossing, while it may be usable on highways and freeways, lane positions cannot be estimated based on white-line crossing at intersections on ordinary roads since there are no white lines within such intersections.
In addition, with Patent Document 2, in the case of, for example, a road with four lanes in each direction, the second and third lanes, for which the line types of the lanes on the left and right are the same, cannot be differentiated. Thus, it is essentially unusable on roads with four or more lanes in each direction. In addition, in order to detect dashed lines and dotted lines drawn with white lines, since the line kind is judged after detecting several strips of paint, there is a problem in that it takes some time before the lane can be judged. Further, if the paint is worn off/eroded, it could cause detection failures or erroneous detections. Still further, it is impractical since standards for line kinds would differ depending on the country of use.
Further, in Patent Document 3, there is adopted a method for calculating the current position of a vehicle based on vehicle direction data, mileage data, and position data from a GPS receiver, that is, a position detection method by a conventional so-called navigation system. Therefore, the estimation accuracy for the position of the vehicle is low, and it is not possible to attain positional accuracy that would allow for an accurate judgement of the lane that the vehicle is traveling in. In particular, because the path traveled is derived from the current position of the vehicle that is calculated by the above-mentioned conventional calculation method, errors accumulate and the estimation accuracy for the position of the vehicle drops in proportion to the length of the path traveled.

In addition, because the lane traveled is determined based on the radius of turn during a left/right turn, when comparing, for example, a case where the vehicle travels straight up to about the center of an intersection and the steering wheel is fully turned at this position to turn with an extremely small radius, and a case where the steering wheel is gradually turned upon entering an intersection to turn within the intersection with a greater radius, there are significant influences caused by differences in how the vehicle is driven, and it is therefore impossible to attain positional accuracy that would allow for an accurate judgement of the lane the vehicle is traveling in.

In addition, because there is adopted a configuration where the identification accuracy for the lane traveled is improved by performing several lane changes, the identification accuracy for the lane traveled is low immediately after a left/right turn is made at an intersection or when no lane changes are performed. Thus, for example, when traveling through consecutive intersections with short intervals in-between, appropriate route guidance for each lane traveled cannot be performed and, as a result, the driver is unable to make lane changes and to drive according to the route guidance.

The present invention is made in view of the points above, and an object thereof is to provide lane judgement equipment and a navigation system that are capable of quickly and accurately judging the lane traveled by a vehicle that is traveling on a road with plural lanes in each direction so as to enable, for example, advanced route guidance by way of the navigation system.

Lane judgement equipment of the present invention that solves the problems above judges the lane traveled by a vehicle traveling on a road with plural lanes in each direction, wherein the lane traveled is judged based on entry distance and map information, the entry distance being a road-width direction distance on the road with plural lanes in each direction from a reference position, which is set around an entrance to the road with plural lanes in each direction, up to the position of the vehicle on the road with plural lanes in each direction.

According to the present invention, because the lane traveled is judged based on the entry distance and the map information, the entry distance being the road-width direction distance on the road with plural lanes in each direction from the reference position, which is set around the entrance to the road with plural lanes in each direction, up to the position of the vehicle on the road with plural lanes in each direction, the distance traveled before the lane traveled is judged can be shortened, and the errors that are accumulated in proportion to the length of the path traveled can be reduced.

It is thus possible to accurately determine which lane, on a road with plural lanes in each direction, the vehicle has entered and is traveling in, and to quickly and accurately judge the lane the vehicle is traveling in. Accordingly, advanced route guidance by a navigation system is made possible. For example, when traveling through consecutive intersections with short intervals in-between, since the lane the vehicle is traveling in can be judged immediately after turning at an intersection, appropriate route guidance at the next intersection is possible.

BRIEF DESCRIPTION OF THE DRAWINGS

Fig. 1 is a block diagram illustrating the configuration of a navigation system according to the first embodiment.
Fig. 2 is a flowchart indicating the contents of processing by a navigation system including a lane judgement process.
Fig. 3 is a flowchart indicating the contents of a map information acquisition process.
Figs. 4(a) and (b) are diagrams illustrating methods for computing the distance from a vehicle to a road marker using an image.
Fig. 5 is a diagram illustrating example 1.
Fig. 6 is a diagram illustrating example 2.
Fig. 7 is a diagram illustrating example 3.
Fig. 8 is a diagram illustrating example 4.

Description of Symbols

| | |
|---|---|
| 1 | Reference position detection unit |
| 2 | Vehicle speed detection unit |
| 3 | Vehicle direction change amount detection unit |
| 4 | Traveled path computation unit |
| 5 | Lane judgement unit (lane judgement equipment) |
| 6 | Vehicle position detection unit |
| 7 | Map information acquisition unit |

| 8 | Map information storage unit |
|---|---|
| 9 | Information notification unit |
| 100 | Navigation system |
| 400, 700, 800 | Vehicle |
| 401,501,701,801 | Traveled path |
| 402, 502, 803 | Stop line (reference position) |
| L | Entry distance |
| L0 | Offset distance |
| L1 | Road-vehicle distance |
| Lc | Separation distance |
| A | Road with one lane in each direction (road of entry) |
| B | Road with three lanes in each direction (road with plural lanes in each direction) |
| B1 | Left-side lane |
| B2 | Center lane |
| B3 | Right-side lane |
| C | Intersection |
| D | Alley |

DETAILED DESCRIPTION OF THE PREFERRED EMBODIMENTS

Embodiments of the invention of lane judgement equipment are described in detail below using drawings.

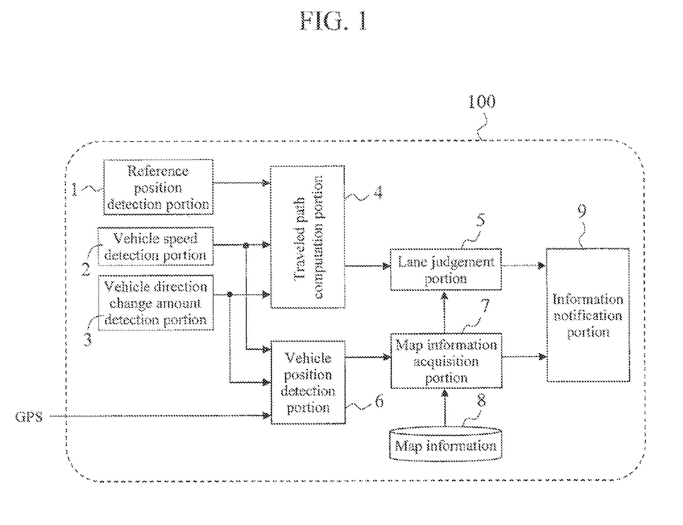

Fig. 1 is a block diagram indicating the functions of a navigation system 100 comprising lane judgement equipment according to the present embodiment.

First, the configuration of the navigation system 100 and the contents of processing thereof will be described. The navigation system 100 comprises: a reference position detection unit 1; a vehicle speed detection unit 2; a vehicle direction change amount detection unit 3; a traveled path computation unit 4; a lane judgement unit 5; a vehicle position detection unit 6; a map information acquisition unit 7; a map information storage unit 8; and an information notification unit 9. The navigation system 100 is programmed into an unillustrated computer, and is repeatedly run with a pre-defined period.

The reference position detection unit 1 performs a process of detecting an entrance to a road with plural lanes in each direction and a reference position that is preset in the periphery thereof. The reference position is detected using image data of the surroundings of a vehicle captured by an in-vehicle camera, communications data acquired by a communications means, and the like.

The vehicle speed detection unit 2 detects the speed of the vehicle, whose methods may include, for example, a method of detecting vehicle speed by averaging values obtained by wheel speed sensors mounted on each of the front/rear left/right wheels of the vehicle, a method of calculating vehicle speed by integrating acceleration values of the vehicle obtained by an acceleration sensor mounted on the vehicle, and the like.

The vehicle direction change amount detection unit 3 detects the amount of change in the direction of the vehicle, and calculates the amount of change in the direction of the vehicle from values obtained by a gyrosensor and a yaw rate sensor.

The traveled path computation unit 4 computes the path traveled by the vehicle from the reference position based on the reference position detected by the reference position detection unit 1, the speed of the vehicle, and the amount of change in the direction of the vehicle.

The lane judgement unit 5 performs a process of judging the lane (vehicular lane) that the vehicle is traveling in on a road with plural lanes in each direction based on the path traveled by the vehicle from the reference position and the map information. Specifically, based on the path traveled, the distance traveled in the road-width direction from the reference position to the position of the vehicle is computed, and the lane the vehicle is traveling in is judged based on the computed distance traveled in the road-width direction and on the map information.

The vehicle position detection unit 6 detects the position of the vehicle based on external signals by, for example, using GPS and the like. It is noted that the position of the vehicle may also be computed by combining the vehicle speed detected by the vehicle speed detection unit 2 with information on the direction of the vehicle detected by the vehicle direction change amount detection unit 3, and integrating the movement vector of the vehicle, and, further, it may also be computed by a combination with position information detected using GPS.

The map information storage unit 8 comprises a storage medium that stores map information. Examples of the storage medium may include computer-readable CD-ROMs, DVD-ROMs, hard disks and the like, but it may also be embodied in a mode where the map information is obtained through communications from an information center.

The map information contains road map data to be displayed on a monitor screen (not shown) of the navigation system 100, location data of various spots, registered spot data that is necessary for destination searches and spot registration, and the like. Further, such information as node information, link information and the like are stored.

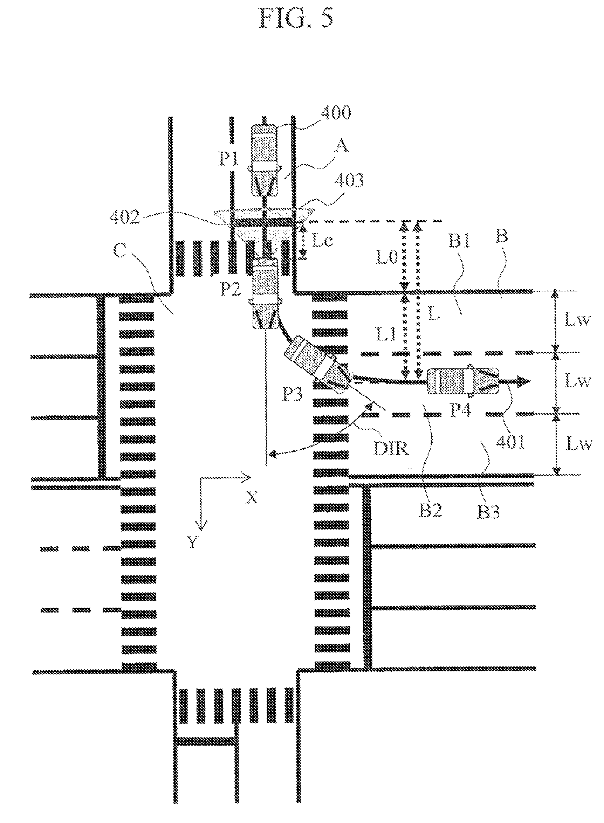

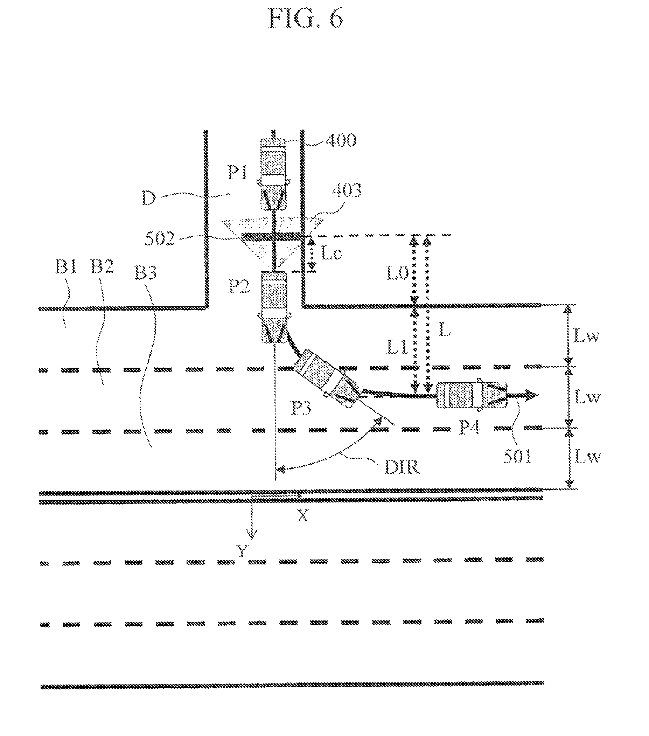

Further, the map information includes various kinds of road information such as the lane count (number of vehicular lanes) of the road with plural lanes in each direction that the vehicle is to enter, lane width (width of the vehicular lane), road type such as ordinary road, freeway and the like, offset distance L0, which is the road-width direction distance from a road marker, such as a stop line, a crosswalk, etc., to the road with plural lanes in each direction (see, for example, Fig. 5 and Fig. 6), and the like.

The map information acquisition unit 7 accesses the map information storage unit 8 based on the vehicle position detected by the vehicle position detection unit 6, and acquires from the map information storage unit 8 the map information of the area surrounding the vehicle position.

The information notification unit 9 performs a process of notifying the passengers of the various kinds of information obtained from the map information acquisition unit 7 and the lane judgement unit 5 through audio or the monitor screen in a manner that is easy to understand. In addition, by changing the content to be notified to the passengers based on the lane that the vehicle is traveling in as learned from the lane judgement unit 5, it is possible to provide clearer and more user-friendly guidance.

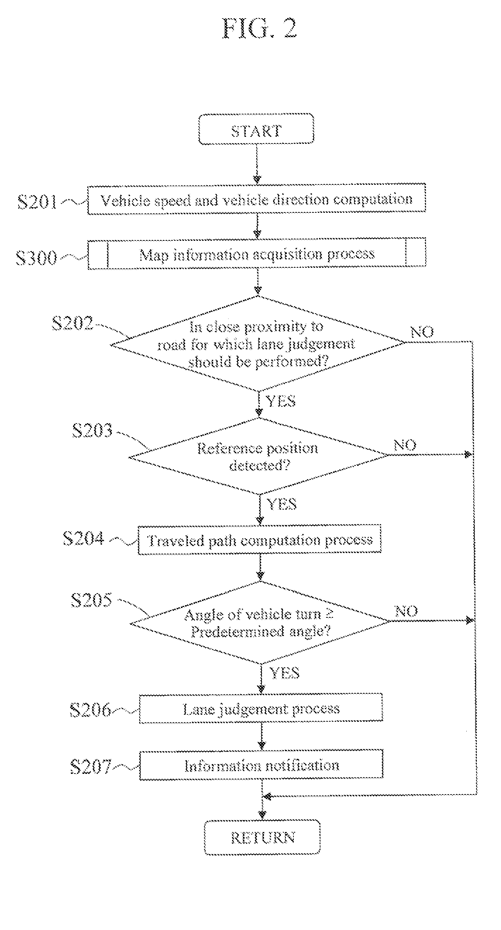

Next, a lane judgement method by the navigation system 100 having the configuration discussed above will be described. Fig. 2 is a flowchart indicating the contents of processing in a lane judgement method according to the present embodiment.

First, in step S201, the speed of the vehicle is detected by the vehicle speed detection unit 2, and the direction of the vehicle is detected by the vehicle direction change amount detection unit 3. Then, in step S300, a process of acquiring map information of the area surrounding the vehicle is performed. It is noted that in cases where map information of the area surrounding the vehicle cannot be acquired, the lane judgment process is not performed.

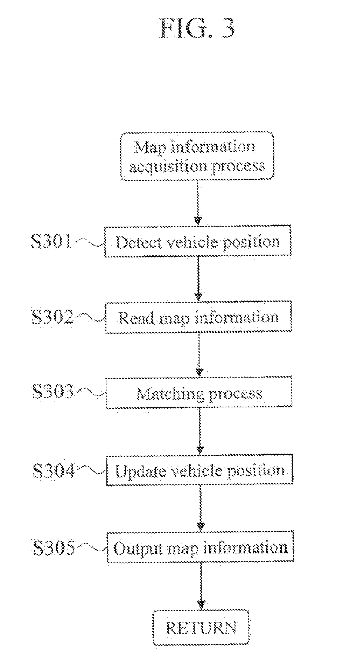

Fig. 3 is a flowchart illustrating details of the contents of the map information acquisition process in step S300 in Fig. 2.

In step S301, the position of the vehicle is detected by the vehicle position detection unit 6 using information on the position of the vehicle received from GPS (e.g., latitude, longitude, etc.) and the information on vehicle speed and vehicle direction detected in step S201. In step S302, necessary parts of the area surrounding the vehicle position are read by the map information acquisition unit 7 from the map information stored in the storage medium of the map information storage unit 8, such as a CD-ROM, a DVD-ROM, a hard disk, or the like.

In step S303, there is performed a process of matching the vehicle position detected in step S301 with the map information that is read in step S302. A common example of this matching process is map matching where a mesh is created on a map, the vehicle position (i.e., latitude and longitude) and positions of mesh grid points on the map are compared, and the mesh grid point closest to the vehicle position is taken to be the vehicle location on the map.

In step S304, the vehicle location is updated in accordance with the results of the matching process executed in step S303. In step S305, map information of the surrounding area is outputted based on the updated vehicle position. Here, the outputted map information includes at least such road information as the lane count, road type, road marker position, offset distance from the road marker to the road to be entered, and the like. It is thus possible to output map information of the area surrounding the vehicle using the vehicle position detection unit 6 and the map information acquisition unit 7.

Turning back to the flowchart shown in Fig. 2, after the map information of the area surrounding the vehicle is acquired in step S300 in Fig. 2, the process proceeds to step S202. In step S202, it is judged whether or not the vehicle is in close proximity to a road for which the vehicle should perform lane judgement.

Here, a road for which the vehicle should perform lane judgement refers to a road with plural lanes in each direction which the vehicle enters, for example, by a turn of the vehicle such as a left turn, a right turn or the like. If the vehicle is in close proximity to a road with plural lanes in each direction (YES in step S202), the process proceeds to step S203 to perform the detection of a reference position. If the vehicle is not in close proximity to a road for which the vehicle should perform lane judgement (NO in step S202), the process is terminated (RETURN).

In step S203, it is judged whether or not a reference position has been detected by the reference position detection unit 1. If a reference position has been detected (YES in step S203), the process proceeds to step S204 to derive the path traveled by the vehicle. On the other hand, if the vehicle has not detected a reference position (NO in step S203), the process is terminated (RETURN).

Reference positions are detected by, for example, capturing, with an in-vehicle camera, images of road markers, road edges such as curbs, guardrails, etc., characteristic places outside of a road such as building boundaries, etc., and the like (hereinafter referred to as road markers and the like).

It is noted that road markers include, for example, road surface markings drawn with raised markers, paint, etc., on the surface of roads of entry into roads with plural lanes in each direction (e.g., stop lines, crosswalks, crosswalk or bicycle crossing ahead, yield, etc.), road signs erected at roadsides (e.g., Stop, Slow, Do Not Enter, Blocked, etc.), traffic lights, and places with characteristically shaped white lines on the road (e.g., places where white lines cross each other, places where white lines bend significantly, etc.).

At the reference position detection unit 1, the position of a road marker captured with an in-vehicle camera and the position of the vehicle at which the road marker is detected are detected as reference positions. If an in-vehicle camera (imaging device) is to be used in the detection of reference positions, the direction in which the in-vehicle camera shoots may be any of the front of the vehicle (front view camera), the side of the vehicle (side view camera), the rear of the vehicle (rear view camera), or an oblique direction. Further, it may also be an omnidirectional camera that shoots in all directions.

As for the kind of the in-vehicle camera, it may be a monocular camera that shoots with one camera, or a stereo camera that shoots with two cameras. As for the number to be mounted, cameras may be disposed at each of the front/rear and left/right of the vehicle

Image information captured by the in-vehicle camera undergoes image processing at the reference position detection unit 1, and a process is performed where certain road markers are detected by such known methods as pattern matching, etc., and the distance to the road marker is computed.

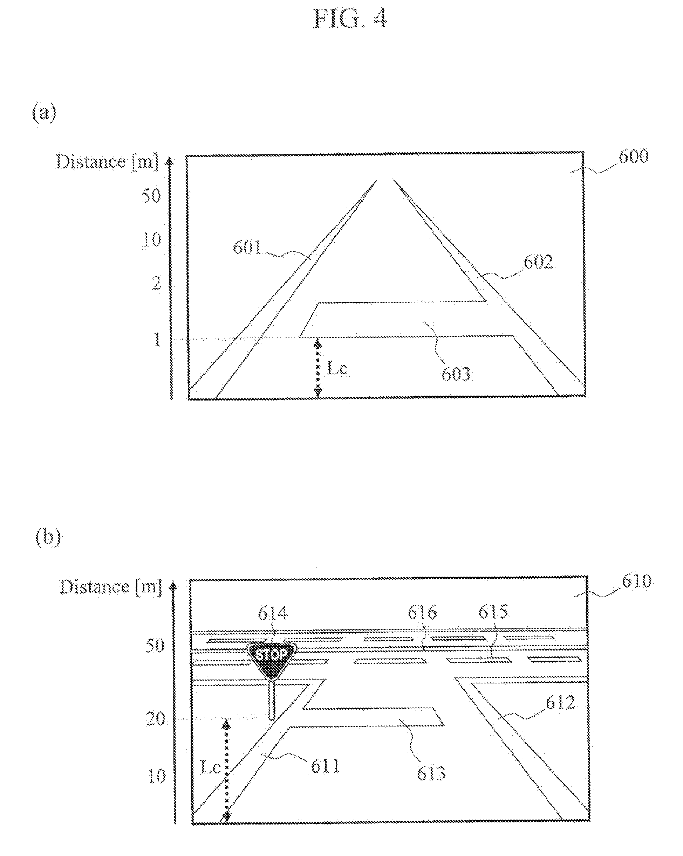

Figs. 4(a) and (b) are diagrams illustrating examples of methods for computing the distance from the vehicle to a road marker using an image captured by an in-vehicle camera. Fig. 4(a) is an image captured with a rear view camera. A left-side white line 601, a right-side white line 602, and a stop line 603 are present within a captured range 600.

In order to detect these road surface markings 601-603, edges are detected by, for example, binarizing the image through known methods, thereby detecting each of the road surface markings 601-603.

Next, a separation distance Lc from a camera of a vehicle 400 to the closer edge of the stop line 603 is computed. Due to properties of the camera image, the distance becomes exponentially farther the higher up we move along the image as in the distance axis shown on the left side of the captured range 600. This distance axis can be uniquely determined in accordance with the position and angle at which the camera is mounted. Thus, in the case of Fig. 4(a), it is possible to calculate the separation distance from the camera of the vehicle 400 to the closer edge of the stop line 603 as being Lc = 1 [m].

Fig. 4(b) is an image captured with a front view camera. As road markers, a left-side white line 611, a right-side white line 612, a stop line 613, a stop sign 614, and white lines 615 and 616 of an intersecting road ahead with two lanes in each direction are present within a captured range 610. Here, the separation distance Lc from the camera of the vehicle 400 to the road sign 614 that instructs the driver to stop can be derived in a fashion similar to Fig. 4(a), and can be calculated as being Lc = 20 [m] in this case.

Here, if, as in Fig. 4(b), both a stop line and a stop sign are present as road markers within an image captured by the camera, it is assumed that the road marker that is to be the reference in finding the separation distance Lc is the stop sign. One reason for this is that, whereas stop lines are generally detected using horizontal edge information, stop signs are detected through pattern matching and are therefore detected at a relatively higher rate.

Further, if communications are to be utilized for the detection of road markers, communications terminals are installed both in the vehicle and at roadsides, and road markers may be detected by transmitting road marker information from the roadside communications terminal to the vehicle, and receiving that information with the communications terminal in the vehicle. Communications may be realized by any means (frequency band, output, etc.). Roadside communications terminals may include, for example, radio beacons and optical beacons of the VICS (Vehicle Information and Communication System), etc. Specifically, by acquiring the position (absolute position or position relative to the vehicle) of a road marker, such as a stop line or the like, by means of a beacon, it is possible to calculate the distance between the vehicle and the road marker.

It is noted that since the road markers to be detected by the vehicle at intersections are most likely the paint of the stop line 613 and the paint of crosswalks, it is preferable that these be detected.

Turning back to the flowchart shown in Fig. 2, in step S204, a process of computing the path traveled by the vehicle is performed. For example, the position of the vehicle at which the road marker was detected in step S203 is taken to be the reference position, and using the information on the vehicle speed and vehicle direction detected in step S201, the path traveled from the reference position is computed.

The computation method for the path traveled is generally referred to as autonomous navigation. Autonomous navigation is a method for successively calculating the position of the vehicle by adding up the speed vector of the vehicle derived from vehicle speed and direction to the initial position. Specifically, it can be calculated using vehicle speed VSP, and vehicle turn angle DIR through Equation (1) and Equation (2).

$$X = Xz1 + VSP \times \Delta t \times \sin(DIR) \qquad (1)$$

$$Y = Yz1 + VSP \times \Delta t \times \cos(DIR) \qquad (2)$$

Here, (X,Y) represent the current position of the vehicle, (Xz1,Yz1) the previous calculation result for the vehicle position, and Δt the calculation period.

Next, in step S205, it is judged whether or not a vehicle turn of a predetermined reference angle or greater has been made since the detection of the road marker by the vehicle. Here, it is determined whether or not the vehicle turn angle DIR, which is the amount of change in the direction of the vehicle, is equal to or greater than a preset first reference angle. If it is equal to or greater than the first reference angle (YES in step S205), it is determined that the vehicle has made a turn and entered a road with plural lanes in each direction, and the process proceeds to step S206 to perform lane judgement.

On the other hand, if the turn angle of the vehicle is less than the first reference angle (NO in step S205), the process is terminated (RETURN).

It is noted that since the lane cannot be judged while the vehicle is making a turn, it is determined whether or not the turn of the vehicle has been completed based on such conditions as the stabilizing of the steering angle of the steering wheel, of the angle of the vehicle, etc., and lane judgement is performed after the turn of the vehicle has been completed. For example, in the case of an intersection, it is possible to determine that a turn of the vehicle has been completed if the difference between the direction of the road with plural lanes in each direction which has been entered by a turn of the vehicle of a predetermined angle or more, such as a left/right turn, and the direction of the vehicle at that point becomes equal to or less than a second preset reference angle.

Next, in step S206, a lane judgement process for judging the lane that the vehicle is traveling in is performed. Here, the direction in which the road with plural lanes in each direction that the vehicle enters extends is defined as the X axis direction, and the road-width direction of the road with plural lanes in each direction is defined as the Y axis direction. It is noted that in the present embodiment, a description is provided with respect to an example in which the X axis direction and the Y axis direction are substantially orthogonal to each other. However, the angle is by no means limited as being orthogonal, and the X axis and the Y axis need only be mutually intersecting.

First, using the path traveled by the vehicle as computed in step S204, an entry distance L, which is the distance traveled in the road-width direction (distance traveled in the Y axis direction) from the reference position detected in step S203 to the rear of the vehicle, is calculated.

Then, subtracting the offset distance L0 from the entry distance L, a road-vehicle distance L1, which is the distance in the road-width direction from the outer edge of the road with plural lanes in each direction to the position of the vehicle, is calculated. Then, from this road-vehicle distance L1 and the map information (lane count, road type, distance from road marker to the road to be entered, etc.) acquired in step S300, the lane that the vehicle is traveling in is estimated.

Finally, in step S207, route guidance is altered based on the information on the lane that the vehicle traveling in as estimated in step S206, and information is notified to the passengers through audio and/or the screen.

According to the navigation system 100 having the configuration described above, when the vehicle enters a road with plural lanes in each direction through a turn of the vehicle, the lane traveled is judged based on the traveled distance L in the width direction from a reference position that is preset in the periphery of the entrance to the road with plural lanes in each direction and on map information. Therefore, it is possible to shorten the distance of the path traveled before the lane traveled is judged.

Thus, it is possible to quickly and accurately judge the lane that the vehicle is traveling in, and to minimize errors that are accumulated in proportion to the length of the path traveled. Therefore, in providing, for example, guidance on a junction on a freeway, or guidance on which way to go at an intersection ahead through the navigation system 100, it is possible to provide differentiated route guidance per lane, and advanced route guidance for passengers can thus be realized.

[Example 1]

Next, using Fig. 5, a specific example of a lane judgement process of the navigation system 100 will be described in relation to a certain road condition.

Fig. 5 is a diagram illustrating a case in which, at intersection C where road A with one lane in each direction and road B with three lanes in each direction intersect, the vehicle 400 that is traveling on road A with one lane in each direction enters road B with three lanes in each direction by making a left turn at intersection C. It is noted that the vehicle 400 in this case travels through, in order, spots P1, P2, P3 and P4 to follow the path indicated with a solid line 401.

First, when the vehicle 400 is at spot P1, it is judged based on map information whether or not this spot P1 is in close proximity to a road for which lane judgement should be performed. Since road B which is about to be entered is a road with three lanes in each direction, it is judged that the vehicle 400 is in close proximity to a road for which lane judgement should be performed (YES in step S202), and the detection of a reference position is initiated. It is noted that this judgement need only be performed in the vicinity of intersection C, and a range for judgement is set taking into consideration estimation errors in the position of the vehicle, map errors, etc.

Then, as the vehicle 400 reaches spot P2, which is the entrance to road B, a stop line 402, which is a road marker, is detected (YES in step S203). With the position of this stop line 402 as a reference position, a process of computing the traveled path 401 of the vehicle 400 through autonomous navigation is initiated (step S204).

It is noted that a rear view camera (not shown) that is mounted at the rear of the vehicle 400 is used to detect the stop line 402, which is a road marker, and the area 403 indicated in the figure is the detection range of the rear view camera.

Here, as described above in relation to Fig. 4(a), since the separation distance from the vehicle 400 to the nearer edge of the stop line 402 is calculated as Lc, the computation of the traveled path 401 through autonomous navigation is in fact initiated at a spot that is separated from the reference position by the separation distance Lc.

Then, it is determined whether or not the vehicle 400 has turned by a predetermined angle or more after the stop line 402 was detected to complete that turn (step S205). For example, when the vehicle 400 is at spot P3 in the middle of a left turn, it is determined that the vehicle 400 is in the middle of a turn since the turn angle DIR is less than the preset first reference angle (e.g., 80 degrees or greater). Then, once the vehicle 400 has turned by a predetermined angle or more to be at spot P4, it is determined that a turn has been completed since the vehicle turn angle DIR is equal to or greater than the first reference angle.

It is noted that whether or not the vehicle 400 is in the middle of a turn may also be determined based on the steering angle and the direction of the vehicle 400. For example, if the steering angle of the steering wheel is greater than a preset threshold and the direction of the vehicle, too, is unstable, it may be determined that the vehicle is in the middle of a turn. Then, once the vehicle 400 has turned by a predetermined angle or more to be at spot P4, since the steering angle of the steering wheel is at or below the threshold and the direction of the vehicle, too, is stable, it may be determined that a turn has been completed.

Once it is determined that a turn has been completed, the entry distance L is calculated in order to judge the lane that the vehicle 400 is traveling in (step S206). In a two-axis coordinate system where the X axis extends along road B and the Y axis extends along the road-width direction of road B, the entry distance L is the distance traveled in the road-width direction of road B from the nearer edge of the stop line 402 to vehicle position P4 after the turn has been completed, and is calculated through autonomous navigation with the stop line 402 as a reference position. It is noted that since the entry distance L calculated through autonomous navigation is the distance traveled in the road-width direction of road B from the nearer edge of the stop line 402 to a reference position of the vehicle (e.g., center of gravity), the entry distance L as detected at the point where the stop line 402 was detected at spot P2 is expressed by Equation (3) assuming that the distance to the reference position of the vehicle from the rear view camera is Lr (not shown). The distance traveled in the road-width direction as calculated through autonomous navigation is added to the entry distance L in Equation (3) to calculate the entry distance L after the turn has been completed.

$$L = Lc + Lr \qquad (3)$$

Using this entry distance L, the lane that the vehicle 400 is traveling in on road B with plural lanes in each direction is judged. First, such road information as lane count, road type, etc., regarding road B with plural lanes in each direction are acquired from the map information. Here, the reason the road type is acquired is that it is hypothesized that road type and lane width Lw are correlated. If lane width Lw is appended to the road information, lane width Lw may be acquired directly instead.

In addition, the offset distance L0 from the nearer edge of the stop line 402 up to road B with plural lanes in each direction is also similarly acquired from the map information. Then, the lane that the vehicle 400 is traveling in is judged by seeing how many times greater the road-vehicle distance L1, which is the value obtained by subtracting the offset distance L0 from the entry distance L, is than the lane width Lw. In other words, the road-vehicle distance L1 is expressed by Equation (4) below.

$$L1 = L - L0 \qquad (4)$$

It is noted that the offset distance L0 is either actually measured on the spot or is measured using satellite images and the like and stored in the map information in advance.

This road-vehicle distance L1 represents the distance traveled in the road-width direction from the outer roadside edge of road B up to the position of the vehicle on road B. For example, if the road-vehicle distance L1 is 0.3 - 0.7 times the lane width Lw, it is judged that the lane is the left-side lane (first lane) B1 which is the outermost lane. If the road-vehicle distance L1 is 1.3 - 1.7 times the lane width Lw, it is judged that the lane is the center lane (second lane) B2. If the road-vehicle distance L1 is 2.3 - 2.7 times the lane width Lw, it is judged that the lane is the right-side lane (third lane) B3 which is the innermost (i.e., closest to the center line) lane. In all other cases, no judgement is made since the vehicle is most likely above a line.

Thus, based on the entry distance L from the nearer edge of the stop line 402, which is a reference position that is set at the entrance to road B with plural lanes in each direction, and on map information, it is possible to judge the lane that the vehicle 400 is traveling in in a case where the vehicle 400 has turned at intersection C to enter road B with plural lanes in each direction.

[Example 2]

Next, using Fig. 6, Example 2 of a lane judgement process of the navigation system 100 will be described in relation to a certain road condition.

Fig. 6 is a diagram illustrating Example 2, indicating a case in which the vehicle 400 enters arterial road B with three lanes in each direction from alley D which is a narrow alley. It is noted that the vehicle 400 in this case travels through, in order, spots P1, P2, P3 and P4 to follow the path indicated with a solid line 501.

First, when the vehicle 400 is at spot P1, it is judged whether or not this spot P1 is in close proximity to a road for which lane judgement should be performed. Since road B is a road with plural lanes in each direction, it is judged that the vehicle 400 is in close proximity to a road for which lane judgement should be performed (YES in step S202), and the detection of a reference position is initiated. This judgement, as in Example 1, need only be performed in the vicinity of the entrance to road B from alley D, and a range is set taking into consideration estimation errors in the position of the vehicle, map errors, etc.

Then, as the vehicle 400 reaches spot P2, which is the entrance to road B with plural lanes in each direction, a stop line 502, which is a road marker, is detected (YES in step S203). With the position of this stop line 502 as a reference position, a process of computing the traveled path 501 of the vehicle 400 through autonomous navigation is initiated (step S204).

Here, as described above in relation to Fig. 4(a), since the separation distance from the vehicle to the nearer edge of the stop line 502 is calculated as Lc, the computation of the traveled path 501 through autonomous navigation is in fact initiated at a spot that is separated from the reference position by the separation distance Lc.

Then, it is judged whether or not the vehicle 400 has turned by a predetermined angle or more after the stop line 502 was detected to complete that turn (step S205). As the judgement as regards whether or not the turn has been completed is similar to that in Example 1, a detailed description thereof is herein omitted.

Once it is judged that a turn has been completed, the entry distance L in the figure is calculated in order to judge the lane that the vehicle 400 is traveling in (step S206). In a two-axis coordinate system where the X axis extends along road B with plural lanes in each direction and the Y axis extends along the road-width direction, the entry distance L is the distance traveled in the road-width direction from the nearer edge of the stop line 502 to the vehicle 400 after the turn has been completed, and is calculated through autonomous navigation with the stop line 502 as a reference position. It is noted that since the entry distance L calculated through autonomous navigation is the distance traveled in the road-width direction of road B from the nearer edge of the stop line 502 to a reference position of the vehicle (e.g., center of gravity), the entry distance L as detected at the point where the stop line 502 was detected at spot P2 is expressed by Equation (5) assuming that the distance from the rear view camera to the reference position of the vehicle is Lr (not shown). The distance traveled in the road-width direction as calculated through autonomous navigation is added to the entry distance L in Equation (5) to calculate the entry distance L after the turn has been completed.

$$L = Lc + Lr \qquad (5)$$

Using this entry distance L, the lane that the vehicle 400 is traveling in on road B with plural lanes in each direction is judged. Here, as in the case in Fig. 5, first, the lane count and the road type of road B with plural lanes in each direction are acquired from the map information. In addition, the offset distance L0 from the nearer edge of the stop line 502 up to road B with plural lanes in each direction is also similarly acquired from the map information. Then, the lane that the vehicle 400 is traveling in is judged by seeing how many times greater the value obtained by subtracting the offset distance L0 from the entry distance L is than the lane width Lw. In other words, the road-vehicle distance L1 is expressed by Equation (6) below.

$$L1 = L - L0 \qquad (6)$$

It is noted that the offset distance L0 is either actually measured on the spot or is measured using satellite images and the like and stored in the map information in advance.

Thus, based on the entry distance L from the stop line 502, which is a reference position that is set at the entrance to road B with plural lanes in each direction, and on map information, it is possible to judge the lane that the vehicle 400 is traveling in in a case where the vehicle 400 has entered road B with plural lanes in each direction from alley D.

[Example 3]

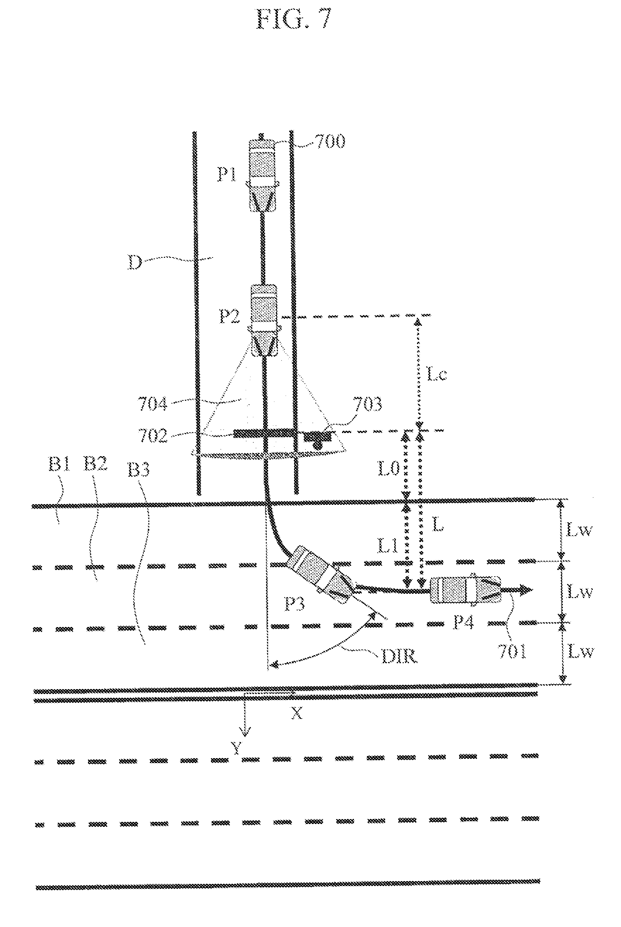

Next, using Fig. 7, Example 3 of a lane judgement process of the navigation system 100 will be described in relation to a certain road condition.

Fig. 7 is a diagram illustrating Example 3, indicating a case in which a vehicle 700 enters arterial road B with three lanes in each direction from alley D which is a narrow alley. It is noted that the vehicle 700 in this case travels through, in order, spots P1, P2, P3 and P4 to follow the path indicated with a solid line 701.

First, when the vehicle 700 is at spot P1, it is judged whether or not this spot P1 is in close proximity to a road for which lane judgement should be performed. Since road B is a road with plural lanes in each direction, it is judged that the vehicle 700 is in close proximity to a road for which lane judgement should be performed (YES in step S202), and the detection of a reference position is initiated. This judgement, as in Example 1 and Example 2, need only be performed in the vicinity of the entrance to road B from alley D, and a range is set taking into consideration estimation errors in the position of the vehicle, map errors, etc.

Then, as the vehicle 700 reaches spot P2, which is a short distance before the entrance to road B with plural lanes in each direction, a stop sign 703, which is a road marker, is detected (YES in step S203). With the position of this stop sign 703 as a reference position, a process of computing the traveled path 701 of the vehicle 700 through autonomous navigation is initiated (step S204).

It is noted that a front view camera (not shown) that is mounted at the front of the vehicle 700 is used to detect the stop sign 703, which is a road marker, and the area 704 indicated in the figure is the detection range of the front view camera. Further, with respect to spot P2 in the present example, although a stop line 702, which is a road marker, is also detectable using the front view camera, in the case of image processing using pattern matching, since the stop sign 703 is generally easier to recognize than the stop line 702, the stop sign 703 is detected with priority.

Here, as described above in relation to Fig. 4(b), since the separation distance from the vehicle to the stop sign 703 is calculated as Lc, the computation of the traveled path 701 through autonomous navigation is in fact initiated at spot P2 which is separated from the reference position by the separation distance Lc.

Then, it is judged whether or not the vehicle 700 has turned by a predetermined angle or more after the stop sign 703 was detected to complete that turn (step S205). As the judgement as regards whether or not the turn has been completed is similar to those in Examples 1 and 2, a detailed description thereof is herein omitted.

Once it is judged that a turn has been completed, the entry distance L in the figure is calculated in order to judge the lane that the vehicle 700 is traveling in (step S206). In a two-axis coordinate system where the X axis extends along road B with plural lanes in each direction and the Y axis extends along the road-width direction, the entry distance L is the distance traveled in the road-width direction of road B from the stop sign 703 to the vehicle 700 after the turn has been completed, and is calculated through autonomous navigation with the stop sign 703 as a reference position. It is noted that since the entry distance L calculated through autonomous navigation is the distance traveled in the road-width direction of road B from the stop sign 703 to a reference position of the vehicle (e.g., center of gravity), the entry distance L when the stop sign 703 was detected at spot P2 is expressed by Equation (7) assuming that the distance from the front view camera to the reference position of the vehicle is Lf (not shown). The distance traveled in the road-width direction as calculated through autonomous navigation is added to the entry distance L in Equation (7) to calculate the entry distance L after the turn has been completed.

$$L = -(Lc + Lf) \qquad (7)$$

Using this entry distance L, the lane that the vehicle 700 is traveling in on road B with plural lanes in each direction is judged. Here, as in the case in Fig. 5, first, the lane count and the road type of road B with plural lanes in each direction are acquired from the map information. In addition, the offset distance L0 from the stop sign 703 to road B with plural lanes in each direction is also similarly acquired from the map information. Then, the lane that the vehicle 700 is traveling in is judged by seeing how many times greater the road-vehicle distance L1, which is the value obtained by subtracting the offset distance L0 from the entry distance L, is than the lane width Lw. In other words, the road-vehicle distance L1 is expressed by Equation (8) below.

$$L1 = L - L0 \qquad (8)$$

It is noted that the offset distance L0 is either actually measured on the spot or is measured using satellite images and the like and stored in the map information in advance.

Thus, based on the entry distance L from the stop sign 703, which is a reference position that is set at the entrance to road B with plural lanes in each direction, and on map information, it is possible to judge the lane that the vehicle 700 is traveling in in a case where the vehicle 700 has entered road B with plural lanes in each direction from alley D.

[Example 4]

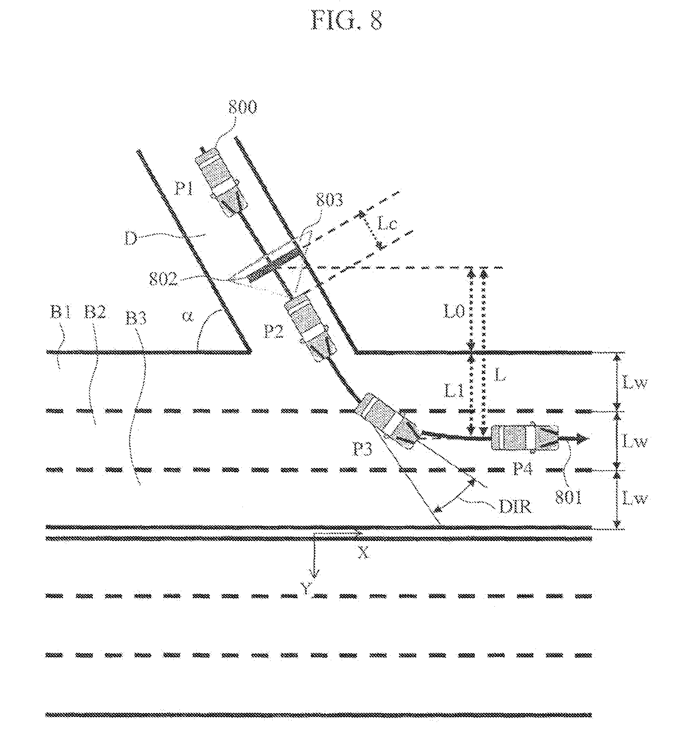

Next, using Fig. 8, Example 4 of a lane judgement process of the navigation system 100 will be described in relation to a certain road condition.

Fig. 8 is a diagram illustrating Example 4, indicating a case in which a vehicle 800 enters arterial road B with three lanes in each direction from alley D which is a narrow alley. It is noted that the vehicle 800 in this case travels through, in order, P1, P2, P3 and P4 to follow the path indicated with a solid line 801. Further, alley D and arterial road B intersect at angle $\alpha$.

First, when the vehicle 800 is at spot P1, it is judged whether or not this spot P1 is in close proximity to a road for which lane judgement should be performed. Since road B is a road with plural lanes in each direction, it is judged that the vehicle 800 is in close proximity to a road for which lane judgement should be performed (YES in step S202), and the detection of a road marker that is to be a reference position is initiated. This judgement, as in Example 1 through Example 3, need only be performed in the vicinity of the entrance to road B from alley D, and a range is set taking into consideration estimation errors in the position of the vehicle, map errors, etc.

Then, as the vehicle 800 reaches spot P2, which is the entrance to road B with plural lanes in each direction, a stop line 802, which is a road marker, is detected (YES in step S203). With the position of this stop line 802 as a reference position, a process of computing the traveled path 801 of the vehicle 800 through autonomous navigation is initiated (step S204).

It is noted that a rear view camera (not shown) that is mounted at the rear of the vehicle 800 is used to detect the stop line 802, which is a road marker, and the area 803 indicated in the figure is the detection range of the rear view camera.

Here, as described above in relation to Fig. 4(a), since the separation distance from the vehicle to the nearer edge of the stop line 802 is calculated as Lc, the computation of the traveled path 801 through autonomous navigation is in fact initiated at spot P2 which is separated from the reference position by the separation distance Lc.

Then, it is judged whether or not the vehicle 800 has turned by a predetermined angle or more after the stop line 802 was detected to complete that turn (step S205). As the judgement as regards whether or not the turn has been completed is similar to those in Example 1 through Example 3, a detailed description thereof is herein omitted.

Once it is judged that a turn has been completed, the entry distance L in the figure is calculated in order to judge the lane that the vehicle 800 is traveling in (step S206). In a two-axis coordinate system where the X axis extends along road B with plural lanes in each direction and the Y axis extends along the road-width direction, the entry distance L is the distance traveled in the road-width direction of road B with plural lanes in each direction from the nearer edge of the stop line 802 up to the vehicle 800 after the turn has been completed, and is calculated through autonomous navigation with the stop line 802 as a reference position. It is noted that since the entry distance L calculated through autonomous navigation is the distance traveled in the road-width direction of road B from the nearer edge of the stop line 802 up to a reference position of the vehicle (e.g., center of gravity), the entry distance L when the stop line 802 was detected at spot P2 is expressed by Equation (9) assuming that the distance from the rear view camera to the reference position of the vehicle is Lr (not shown). The distance traveled in the road-width direction as calculated through autonomous navigation is added to the entry distance L in Equation (9) to calculate the entry distance L after the turn has been completed.

$$L = (Lc + Lr) \times \sin(\alpha) \qquad (9)$$

Here, angle $\alpha$ formed between alley D and arterial road B is acquired from the map information.

Using this entry distance L, the lane that the vehicle 800 is traveling in on road B with plural lanes in each direction is judged. Here, as in the case in Fig. 5, first, the lane count and the road type of road B with plural lanes in each direction are acquired from the map information. In addition, the offset distance L0 from the nearer edge of the stop line 802 up to road B with plural lanes in each direction is also similarly acquired from the map information. Then, the lane that the vehicle 800 is traveling in is judged by seeing how many times greater the value obtained by subtracting the offset distance L0 from the entry distance L is than the lane width Lw. In other words, the road-vehicle distance L1 is expressed by Equation (10) below.

$$L1 = L - L0 \qquad (10)$$

It is noted that the offset distance L0 is either actually measured on the spot or is measured using satellite images and the like and stored in the map information in advance.

Thus, based on the entry distance L from the stop line 802, which is a reference position that is set at the entrance to road B with plural lanes in each direction, and on map information, it is possible, even if the angle of intersection between alley D and road B with plural lanes in each direction is not a right angle, to judge the lane that the vehicle 800 is traveling in in a case where the vehicle 800 has entered road B with plural lanes in each direction from alley D.

Further, with respect to Fig. 6 through Fig. 8, descriptions have been provided with respect to cases in which the vehicle enters road B with three lanes in each direction from alley D which is narrow. However, in cases where the vehicle enters road B from a parking space (not shown) or the like, too, it is similarly possible to judge the lane that the vehicle is traveling in based on the entry distance L from a reference position such as, for example, a guardrail or the edge of a sidewalk.

It is to be noted that the present invention is by no means limited to the embodiments described above, and that various changes in form and detail may be made without departing from the spirit, scope and teaching of the invention.

**Claims**

1. Lane judgement equipment that judges a lane that a vehicle, which has entered a road with plural lanes in each direction from outside of the road with plural lanes in each direction by a turn of the vehicle, is traveling in on the road with plural lanes in each direction, the lane judgement equipment comprising:

   a vehicle position detection unit (6) adapted to detect a position of the vehicle based on an external signal;
   a map information acquisition unit (7) adapted to acquire map information of an area surrounding the position of the vehicle based on the position of the vehicle detected by the vehicle position detection unit;
   a reference position detection unit (1) adapted to detect a reference position that is set in advance in the vicinity of an entrance to the road with plural lanes in each direction;
   a road-width direction traveled distance computation unit adapted to compute a distance traveled in a road-width direction from the reference position detected by the reference position detection unit (1) to the position of the vehicle on the road with plural lanes in each direction; and
   a lane judgement unit (5) adapted to judge the lane that the vehicle is traveling in based on the distance traveled in the road-width direction as computed by the road-width direction traveled distance computation unit and on the map information acquired by the map information acquisition unit (7).

2. The lane judgement equipment according to claim 1, wherein the map information includes information on the road with plural lanes in each direction comprising lane count, lane width, and offset distance along the road-width direction from the reference position to the road with plural lanes in each direction.

3. The lane judgement equipment according to claim 1 or 2, further comprising:

   a vehicle speed detection unit (2) adapted to detect a speed of the vehicle;
   a vehicle direction change amount detection unit (3) adapted to detect an amount of change in the direction of the vehicle; and
   a traveled path computation unit (4) adapted to compute a traveled path from the reference position based on the speed of the vehicle and the amount of change in the direction of the vehicle, wherein
   the lane judgement unit (5) computes the distance traveled in the road-width direction using the traveled path computed by the traveled path computation unit.

4. The lane judgement equipment according to at least one of claims 1 to 3, wherein the lane judgement unit (5) determines that the turn of the vehicle is being performed when the amount of change in the direction of the vehicle detected by the vehicle direction change amount detection unit reaches or exceeds a preset first reference angle.

5. The lane judgement equipment according to at least one of claims 1 to 4, wherein the lane judgement unit (5) determines that the turn of the vehicle has been completed when a difference between a direction of the road with plural lanes in each direction and the direction of the vehicle reaches or falls below a preset second reference angle.

6. The lane judgement equipment according to at least one of claims 1 to 5, wherein the reference position detection unit (1) detects a position of a road surface marking as the reference position.

7. The lane judgement equipment according to at least one of claims 1 to 6, wherein the reference position detection unit (1) detects a position of a road sign as the reference position.

8. The lane judgement equipment according to at least one of claims 1 to 7, wherein the reference position detection unit (1) detects as the reference position at least one of: a position of a characteristic point in a shape of a road white line; a position of an edge of a road including a curb or a guardrail; and a position of a characteristic point outside of a road including a building boundary.

9. The lane judgement equipment according to at least one of claims 1 to 8, wherein the reference position detection unit (1) detects the reference position based on an image captured by an imaging device mounted on the vehicle.

10. The lane judgement equipment according to at least one of claims 1 to 9, wherein the reference position detection unit (1) detects the reference position by receiving a communication from a communications device installed on a road.

11. The lane judgement equipment according to at least one of claims 1 to 10, wherein the lane judgement unit (2) comprises:

    a road-vehicle distance computation unit adapted to compute a road-vehicle distance, which is a distance from an outer edge of the road with plural lanes in each direction, by subtracting the offset distance from the distance traveled in the road-width direction computed by the road-width direction traveled distance computation unit; and a lane estimation unit adapted to estimate the lane that the vehicle is traveling in based on the road-vehicle distance computed by the road-vehicle distance computation unit and on the lane width and lane count information of the map information acquired by the map information acquisition unit.

12. A navigation system comprising the lane judgement equipment according to at least one of claims 1 to 11.

FIG. 1

# FIG. 2

START

S201 — Vehicle speed and vehicle direction computation

S300 — Map information acquisition process

S202 — In close proximity to road for which lane judgement should be performed? — NO

YES

S203 — Reference position detected? — NO

YES

S204 — Traveled path computation process

S205 — Angle of vehicle turn ≥ Predetermined angle? — NO

YES

S206 — Lane judgement process

S207 — Information notification

RETURN

15

FIG. 3

```
                    ┌─────────────────────┐
                    │   Map information    │
                    │  acquisition process │
                    └──────────┬──────────┘
                               │
                               ▼
S301 ~─────────────┌─────────────────────┐
                   │ Detect vehicle position │
                   └──────────┬──────────┘
                              │
                              ▼
S302 ~─────────────┌─────────────────────┐
                   │  Read map information │
                   └──────────┬──────────┘
                              │
                              ▼
S303 ~─────────────┌─────────────────────┐
                   │   Matching process    │
                   └──────────┬──────────┘
                              │
                              ▼
S304 ~─────────────┌─────────────────────┐
                   │ Update vehicle position │
                   └──────────┬──────────┘
                              │
                              ▼
S305 ~─────────────┌─────────────────────┐
                   │ Output map information │
                   └──────────┬──────────┘
                              │
                              ▼
                    ┌─────────────────────┐
                    │       RETURN        │
                    └─────────────────────┘
```

# FIG. 4

(a)

(b)

# FIG. 5

EP 2 269 883 A1

FIG. 6

19

FIG. 7

FIG. 8

Europäisches
Patentamt
European
Patent Office
Office européen
des brevets

# EUROPEAN SEARCH REPORT

Application Number

EP 10 16 7694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/010938 A1 (KUBOTA TOMOKI [JP] ET AL) 11 January 2007 (2007-01-11) * paragraphs [0018] - [0022], [0024] - [0026], [0040] * | 1 | INV. B60W30/12 B60W40/06 |
| A | US 2008/221767 A1 (IKEDA YUKIHIRO [JP] ET AL) 11 September 2008 (2008-09-11) * paragraphs [0008], [0017] * | 1 | |
| A | US 2007/142995 A1 (WOTLERMANN BERND [DE]) 21 June 2007 (2007-06-21) * paragraphs [0011] - [0023] * | 1 | |
| A | DE 10 2005 039103 A1 (BOSCH GMBH ROBERT [DE]) 1 March 2007 (2007-03-01) * paragraphs [0002], [0008]; claims 1,2 * | 1 | |
| A | US 2005/216172 A1 (SCHRODER MARKO [DE] SCHROEDER MARKO [DE]) 29 September 2005 (2005-09-29) * paragraphs [0019], [0035] - [0037] * | 1 | TECHNICAL FIELDS SEARCHED (IPC) B60W G08G |

The present search report has been drawn up for all claims

| Place of search | Date of completion of the search | Examiner |
|---|---|---|
| Munich | 11 October 2010 | Plenk, Rupert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 7694

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2010

| Patent document cited in search report | | Publication date | Patent family member(s) | | Publication date |
|---|---|---|---|---|---|
| US 2007010938 | A1 | 11-01-2007 | DE 102006000326 A1 | | 11-01-2007 |
| | | | JP 2007017340 A | | 25-01-2007 |
| US 2008221767 | A1 | 11-09-2008 | EP 1919752 A1 | | 14-05-2008 |
| | | | WO 2007026242 A1 | | 08-03-2007 |
| | | | JP 2007062651 A | | 15-03-2007 |
| US 2007142995 | A1 | 21-06-2007 | DE 10358034 A1 | | 14-07-2005 |
| | | | WO 2005061265 A1 | | 07-07-2005 |
| DE 102005039103 | A1 | 01-03-2007 | CN 101243330 A | | 13-08-2008 |
| | | | EP 1920268 A1 | | 14-05-2008 |
| | | | WO 2007020153 A1 | | 22-02-2007 |
| | | | US 2009326752 A1 | | 31-12-2009 |
| US 2005216172 | A1 | 29-09-2005 | AT 326361 T | | 15-06-2006 |
| | | | AU 2003285338 A1 | | 15-06-2004 |
| | | | DE 10254421 A1 | | 03-06-2004 |
| | | | WO 2004045887 A1 | | 03-06-2004 |
| | | | EP 1562775 A1 | | 17-08-2005 |
| | | | ES 2264014 T3 | | 16-12-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006023278 A
- JP 2000105898 A

- JP 11211491 A